# EUROPÄISCHE PATENTSCHRIFT

(11) **EP 2 269 795 B1**
(45) Veröffentlichungstag und Bekanntmachung des Hinweises auf die Patenterteilung: **31.07.2013**
(21) Anmeldenummer: 10164563.8
(22) Anmeldetag: 01.06.2010
(51) Int. Cl.: B29C 43/18, B29C 35/08, B29C 43/20, H01H 13/88, H01H 11/00

(54) **Verfahren zur Herstellung einer Folientastatur und Folientastatur**
Process of manufacturing a membrane keypad and membrane keypad
Procédé de fabrication d'un clavier souple à membrane et clavier souple à membrane

(30) Priorität: 07.07.2009 CH 10542009; 09.06.2009 CH 8812009
(43) Veröffentlichungstag der Anmeldung: 05.01.2011
(73) Patentinhaber: Abatek International AG, 8303 Bassersdorf (CH)
(72) Erfinder: Thielcke, Björn, 8700 Küsnacht (CH); Keist, Christoph, 9630 Wattwil (CH); Birrer, Stefan, 6300 Zug (CH)
(74) Vertreter: Bremi, Tobias Hans

(56) Entgegenhaltungen:
- EP-A- 0 298 873
- EP-A- 0 772 213
- WO-A-2006/137645
- DE-A1- 2 362 380
- GB-A- 2 166 383
- US-A1- 2002 005 791
- DATABASE WPI Week 199407 Thomson Scientific, London, GB; AN 1994-051571 XP002551579, & JP 6 005151 A (FUJI POLYMATIC KK) 14. Januar 1994 (1994-01-14)
- DATABASE WPI Week 199942 Thomson Scientific, London, GB; AN 1999-499631 XP002551580, & JP 11 213792 A (SHINETSU POLYMER KK) 6. August 1999 (1999-08-06)
- DATABASE WPI Week 199901 Thomson Scientific, London, GB; AN 1999-003949 XP002551581, & JP 10 278125 A (KYUSHU INOAKKU KK) 20. Oktober 1998 (1998-10-20)

## Beschreibung

### TECHNISCHES GEBIET

Die vorliegende Erfindung betrifft ein Verfahren zur Herstellung einer flexiblen, dreidimensionalen Überzugstruktur für einen flexiblen Schalter oder eine flexible Bedieneroberfläche.

### STAND DER TECHNIK

Bedienelemente z.B. im Automobilwerden heute durch einen klassischen Aufbau von Kunststofftasten, welche in einem Gehäuse sitzen, realisiert. Diese Anordnung ergibt zwangsläufig einen relativ dicken, auftragenden Aufbau für die Führung der Tasten sowie Spalten zwischen den einzelnen Tasten. Die Gehäuseoberfläche ist dabei meist in einer geschwungenen dreidimensionalen Form ausgeführt.

### Heute bekannte Lösungen sind folgende:

Auf der einen Seite sind Folientastaturen mit Prägungen oder Lackauftrag bekannt. Solche Folientastaturen erfüllen die Anforderungen von geschlossener Oberfläche und bei Verwendung von Prägungen oder selektivem Lackauftrag von angeformten Tastengeometrien, sie sind jedoch immer auf eine flache Grundgeometrie beschränkt. So beschreibt beispielsweise die DE 20 2005 012 021 U1 ein Bedienelement, bei welchem auf einer völlig flachen Oberfläche beispielsweise aus Polyester, welche jeweils im Bereich der Tasten über eine umlaufende Randprägung verfügt, eine Taste vorgesehen wird.. Der Bereich der Randprägung wird dazu mit einem polymeren Beschichtungsmaterial mit antibakteriellen Bestandteilen ausgegossen und mittels UV-Bestrahlung in seine dreidimensionale Wirkung und hohe Brillanz gebracht. Die Formgebung der Oberfläche ist dabei mit anderen Worten durch die Möglichkeit, in dieser Randprägung ein Material vor dem aushärten anzuordnen, das heißt es kann nur eine glatte leicht gekrümmte Oberfläche erreicht werden.

Auf der anderen Seite sind tiefgezogene Folien bekannt. Durch Tiefziehen können Folien in eine dreidimensionale Form gebracht werden und auch Tastengeometrien können angeformt werden. Einschränkungen ergeben sich durch die notwendigen Biegeradien (keine scharfen Kanten möglich), durch den minimalen Abstand der Tasten (genügend Material für das Tiefziehen muss zwischen den Tasten vorhanden sein). Auch die funktionelle Betätigung einer solchen Taste ist nicht einfach zu realisieren, da die verformte Folie den Tastenhub mitmachen muss.

Des weiteren sind Silikonoberflächen bekannt. Aus Silikon können frei geformte funktionelle Bedienoberflächen hergestellt werden. Diese Lösung zeichnet sich aus durch eine weiche Oberfläche und beschränkte Brillanz der Silikon-Farben. Aus diesem Grund wird diese Lösung gerade für gossflächige Anwendungen in der Regel nicht gewählt.

Zu guter letzt sind so genannte UV Keypads bekannt. Dabei wird auf einer flexiblen Kunststofffolie eine Vergussmasse angebracht, welche die Oberflächenstruktur und die Tastenformen abbildet. Eine solche Technologie ist z.B. in US 2008/224247 beschrieben. Dabei wird so vorgegangen, dass eine Form, welche die Kastenformen im Negativ darstellt, vorgelegt wird, eine Vergussmasse in die Form eingetragen wird, eine flexible Kunststofffolie aufgelegt wird und anschließend die Kunststofffolie mit einer Rolle von der Rückseite so abgerollt wird, dass die Vergussmasse die Form ausfüllend in diese hinein gepresst wird. Anschließend wird das Material ausgehärtet, das heißt die ausgehärtete Vergussmasse ist anschließend auf der Kunststofffolie befestigt und bildet die Oberflächenstruktur. Diese Oberflächenstruktur wird anschließend in einem mehrschichtigen Laminat zum eigentlichen Schalter zusammengeführt. Diese Technologie erfüllt viele Anforderungen, das Verfahren erlaubt aber nur relativ flache OberflächenStrukturen.

Der GB 2166383 ist ein Verfahren zur Herstellung eines flexiblen Druckknopfes bekannt, bei welchem in eine Gussform bei Material eingetragen wird und dieses anschließend durch die Anwendung von Wärme ausgehärtet wird, so dass eine dreidimensionale flexible Struktur ausgebildet wird.

Aus der DE2362380 ist ein Verfahren bekannt zur Herstellung eines Tastenfeldes für Büromaschinen, wobei auch hier das in eine Form eingeführte Material durch Anwendung von Wärme ausgehärtet wird.

### DARSTELLUNG DER ERFINDUNG

Ziel der vorliegenden Erfindung ist es unter anderem, die UV Keypad Technologie auf tatsächlich dreidimensionale Oberflächen auszuweiten. Ziel dieser Erfindung ist es also unter anderem, eine geschlossene dreidimensional geformte Bedienoberfäche vorzugsweise mit angeformten funktionellen Tastengeometrien herzustellen aus einem hochwertig anmutenden Kunststoff.

Die vorliegende Erfindung betrifft entsprechend spezifisch ein Verfahren zur Herstellung einer flexiblen, dreidimensionalen Überzugstruktur mit einer vorderseitigen Oberflächenwölbung und einer rückseitigen Vertiefung für einen flexiblen Schalter oder eine flexible Bedieneroberfläche.

Das Verfahren umfasst dabei wenigstens folgende Schritte:
1. In eine Pressform mit einer die Ausformung einer Oberflächenwölbung bildenden Vertiefung (gewissermassen Kavität) wird eine ungehärtete, das heißt normalerweise im wesentlichen nicht-elastisch verformbare und wenigstens zähflüssige transparente Vergussmasse eingetragen, beispielsweise indem ein Tropfen oder ein Spritzer in die Vertiefung gegeben wird.
2. Ein in die Vertiefung wenigstens teilweise eindringender Gegenstempel wird in die Vertiefung eingeführt, so dass sich die Vergussmasse im Spalt zwischen der Ausformung der Oberflächenwölbung der Pressform und der Oberfläche des Gegenstempels verteilt und diesen Spalt im wesentlichen vollständig ausfüllt. Dabei bildet der Gegenstempel-gewissermaßen ein Positiv zur negativen Vertiefung in der Pressform, wobei zwischen diesem Positiv und dem Negativ der Vertiefung die eigentliche Kavität gebildet wird.
3. Anschließend wird Energie in die Vergussmasse eingetragen, so dass die Vergussmasse zu einer im wesentlichen selbsttragenden, flexiblen, transparenten Oberflächenschicht mit einer vorderseitigen Oberflächenwölbung und einer rückseitigen Vertiefung aushärtet. Die Energie wird dabei in Form von von UV-Strahlung eingetragen, typischerweise findet beim Prozess des Aushärtens eine wenigstens teilweise Vernetzung und/oder Polymerisation der Vergussmasse statt.

Die resultierende Oberflächenschicht respektive die Überzugsstruktur ist also gewissermaßen topfförmig ausgebildet und verfügt über eine dreidimensional strukturierte, d.h. konkave und/oder konvexe Oberfläche und eine entsprechende konvexe respektive konkave Rückseite. Die Rückseite ist also im Gegensatz zu den Strukturen nach dem Stand der Technik nach innen gekrümmt und erlaubt im entsprechenden Hohlraum die Aufnahme von weiteren Funktionselementen wie beispielsweise eines elastischen Trägers, elektrischen Elementen etc.

Es kann so im Rahmen eines UV- Keypads eine geschlossene, tatsächlich dreidimensionale Oberflächenschicht ausgebildet werden mit einer Dicke von typischerweise im Bereich von 0.02-1.5 mm, wobei zusätzliche dickere, in Form von Tastenkonturen über die Oberfläche hervortretende Bereiche vorgesehen sein können (vergleiche weiter unten). Im Bereich außerhalb der Tastenkonturen verfügt die Oberflächenschicht aus der Vergussmasse bevorzugtermassen über eine dicke im Bereich von 0.05-0.15 mm.

Wie bereits erwähnt wird die Energie zur Aushärtung der Vergussmasse in Form von UV-Strahlung eingetragen. Um zu ermöglichen, dass die Aushärtung durchgeführt werden kann, während die Vergussmasse in der Pressform liegt, kann entweder die Pressform für die eingestrahlte Strahlung gewissermassen im wesentlichen transparent ausgebildet werden und/oder der Gegenstempel. Gegenstempel und/oder Pressform sind also wenigstens bereichsweise aus einem für die eingestrahlte UV-Strahlung im wesentlichen durchlässigen Material wie z.B. transparentem Silikon oder Glas bestehen, ggf. in beschichteter Form. Vorzugsweise wird gemäß einer weiteren Ausführungsform der Gegenstempel für die eingestrahlte UV-Strahlung im wesentlichen durchlässig ausgebildet, was es dann ermöglicht, dass die UV-Strahlung durch den Gegenstempel in die Vergussmasse eingetragen wird.

Die Vergussmasse kann in einem oder auch in mehreren Schritten oder Stufen ausgehärtet werden. So ist es möglich, die Vergussmasse in nur einem einzigen abschließenden Schritt auszuhärten, es ist aber auch möglich die Masse in zwei Schritten auszuhärten, beispielsweise indem die Vergussmasse in einem ersten Schritt zusammen mit der Folie vorgehärtet wird und erst nach der Dekoration der Folie in die definitive dreidimensionale Form gebracht und anschließend nachgehärtet, das heißt vollständig ausgehärtet wird. Eine weitere bevorzugte Ausführungsform zeichnet sich dadurch aus, dass die Pressform in der Vertiefung neben der Ausformung der Oberflächenwölbung in deren gekrümmter Oberfläche wenigstens eine, bevorzugt mehrere, weitere, tiefergehende Vertiefungen, bevorzugt in Form von Negativen von tastenförmigen Ausbuchtungen aufweist. Dies sind die oben erwähnten Tastenkonturen, von welchen eine Vielzahl vorhanden sein kann. Diese tiefergehenden Vertiefungen werden im Prozess von der Vergussmasse ebenfalls ausgefüllt und bilden in der Überzugsstruktur eine dreidimensionale Oberflächenstruktur ( die Tastenkonturen). Der Gegenstempel kann im Bereich dieser Konturen ebenfalls weitere positive Ausbuchtungen aufweisen, bevorzugtermassen verfügt aber der Gegenstempel nicht über solche solchen zusätzliche Ausbuchtungen, so dass die Überzugsstruktur jeweils im Bereich der dreidimensionalen Oberflächenstruktur (der Tastenkonturen) eine größere Dicke aufweist als in den umgebenden Bereichen.

Dicke der Oberflächenschicht im Bereich der Tastenkonturen kann dann im Bereich von 0.2-3.0 mm liegen, typischerweise ist es möglich, dass die Tastenkonturen um 0.5 - 1.5 mm über die Oberfläche der restlichen Oberflächenschicht hervortreten.

Zwischen Gegenstempel und Vergussmasse kann bevorzugtermassen eine (oder auch mehrere), bevorzugt transparente, Folie eingelegt werden, welche mit der transparenten Oberflächenschicht nach der Aushärtung der Vergussmasse verbunden ist.

Die Oberflächenschicht muss generell nicht durchgängig sein, mit anderen Worten kann eine hinter der Oberflächenschicht angeordnete Folie, unabhängig davon ob sie in der Form oder danach vorgesehen wird, an der Oberfläche teilweise frei liegen. Liegt eine solche Folie an der Oberfläche frei, verfügt sie vorzugsweise über eine kratzfeste und/oder antifingerprint Beschichtung.

Gemäß einer bevorzugten Ausführungsform kann die Folie vor dem Einlegen in eine dreidimensionale Form gebracht worden sein so beispielsweise in einem Tiefziehprozess. Eine solche Folie mit bereits vorgegebener Form kann beispielsweise auf den Gegenstempel vor dem einführen des selben in die Pressform aufgesetzt werden, oder aber sie kann nach dem Eintrag der Vergussmasse in die Vertiefung der Pressform in die Pressform eingelegt werden.

Es ist aber auch gemäß einer weiteren bevorzugten Ausführungsform möglich, eine weitere zweite Pressform ausschließlich für die Vorformung dieser Folie vorzusehen, welche gewissermassen ein Negativ zur Oberflächenkonturierung des Gegenstempels darstellt. Bei dieser Ausführungsform wird dann eine flache Folie über die zweite Pressform oder vor den Gegenstempel geführt, und der Gegenstempel in einem ersten Schritt in die zweite Pressform eingeführt (gegebenenfalls unter zusätzlicher Wärmeeinwirkung damit die Folie leichter umgeformt werden kann), wobei die Folie in ihre dreidimensionale Form gebracht wird. Anschließend wird der Gegenstempel mit darauf sitzender verformter Folien aus der zweiten Pressform herausgeführt und direkt in die Pressform, in welche die Vergussmasse bereits eingetragen wurde, geführt.

Alternativ ist es möglich, zunächst ohne Folie unter Verwendung von Pressform und Gegenstempel die Oberflächenschicht aus der Vergussmasse herzustellen, und anschließend mit dem gleichen Gegenstempel eine Folie tief zu ziehen, und dann die Folie in den Hohlraum auf der Rückseite der Oberflächenschicht einzufähren und mit der Oberflächenschicht stoffschlüssig zu verbinden.

Eine solche Folie kann aus verschiedenen Materialien bestehen und ist vorzugsweise transparent. Die Folie kann aus Polyester, Polyethylen, Polypropylen, Polycarbonat, PET, oder Polyurethan, bestehen, es kann sich dabei auch um eine aus gleichen oder verschiedenen Materialien bestehende Mehrschichtfolie handeln. Der Begriff der Folie, wie er in der Folge verwendet wird, schließt entsprechend auch Mehrschichtfolien mit ein. Des weiteren kann anstelle einer Folie oder in Kombination mit einer solchen Folie auch eine Haut für den Autoinnenraum aus PVC, PU und/oder TPO (Thermo Plastic Olefin elastomer) verwendet werden. Vorzugsweise wird für die Folie Polycarbonat, eingesetzt.

Eine solche Folie hat bevorzugtermassen eine Dicke im Bereich von 0.1-1 mm, vorzugsweise im Bereich von 0.2-0.5 mm. Die Dicke der Oberflächenschicht aus der Vergussmasse ist typischerweise maximal 1.5 mal so groß wie die Dicke der Folie.

Wie bereits angedeutet ist es auch möglich, dass die wenigstens eine Folie in die rückseitige Vertiefung eingelegt und mit der Oberflächenschicht stoffschlüssig verbunden wird, wobei bevorzugtermassen die Folie vor dem Einlegen bereits in eine dreidimensionale Form gebracht worden ist, insbesondere bevorzugtermassen in einem Tiefziehprozess. Es kann auch eine solche nachträgliche eingeführte Folie zusätzlich zu einer bereits bei der Herstellung der Oberflächenschicht in die Form eingelegten Folie vorgesehen werden, die beiden Folien werden dann stoffschlüssig miteinander verbunden. Die Verbindung von Oberflächenschicht mit Folie oder von Folien untereinander findet bevorzugtermassen unter Zuhilfenahme eines UV-Klebers statt. Der Kleber kann dabei, weil die Vergussmasse transparent ist, durch Einstrahlung durch die bereits ausgehärtete Oberflächenschicht aktiviert werden.

Eine weitere bevorzugte Ausführungsform ist dadurch gekennzeichnet, dass wenigstens eine der Folien auf der der Oberflächenschicht zugewandten Vorderseite und/oder der Rückseite mit einer Oberflächendekoration versehen wird, wobei diese Oberflächendekoration bevorzugtermassen in einem Druckverfahren wie insbesondere Siebdruck, Laserdruck, Stempeldruck, Spraydruck aufgebracht werden kann.

Eine Oberflächendekoration kann auf eine oder mehrere solcher Folien vor und/oder nach der Ausbildung der Oberffächenschicht aufgebracht werden.

Wie bereits erwähnt können auch mehrere Folien in einem solchen Aufbau eingesetzt werden. So ist es gemäß einer weiteren Ausführungsform möglich, dass wenigstens zwei Folien eingesetzt werden, wobei wenigstens eine, für zur Aushärtung der Vergussmasse eingestrahlte UV-Strahlung transparente erste Folie zwischen Gegenstempel und Vergussmasse eingelegt wird und also direkt mit der Vergussmasse verbunden ist, und wenigstens eine zweite, vorzugsweise vor dem Einlegen in eine dreidimensionale Form gebrachte Folie, welche zum Beispiel auf der Vorderseite und/oder der Rückseite eine Oberflächendekoration aufweisen kann, in die rückseitige Vertiefung (wo die erste Folie angeordnet ist) eingelegt und mit der Rückseite der ersten Folie bevorzugtermassen stoffschlüssig verbunden wird.

Insbesondere wenn ein eigentlicher Schalter aufgebaut werden soll, wird, gemäß einer weiteren bevorzugten Ausführungsform, in die rückseitige Vertiefung ein Träger aus transparentem elastischem Material, insbesondere aus Silikon, eingelegt und mit der Oberflächenschicht wenigstens mittelbar stoffschlüssig verbunden.

Dabei kann der Träger entweder in seiner dreidimensionalen Formgebung bereits vorgefertigt eingesetzt werden (beispielsweise hergestellt in einem Spritzverfahren), wobei er dann auf seiner der Oberflächenschicht zugewandten Oberflächen eine Oberflächendekoration aufweisen kann, oder der Träger kann sogar auch direkt in der rückseitigen Vertiefung in einem Molding-Verfahren ausgeformt werden, wobei beispielsweise immer noch die gleiche-Pressform als Matrix verwendet werden kann. Eine weitere bevorzugte Ausführungsform ist dadurch gekennzeichnet, dass der Träger, welcher vorzugsweise auf seiner der Oberflächenschicht abgewandten Rückseite über Betätigungsstössel, die über eine im Träger ausgebildete Membrane beweglich sind, verfügt mit der daran oberseitig befestigten Oberflächenschicht bevorzugt mit wenigstens einer dazwischen liegenden Folie auf eine Leiterplatte, vorzugsweise mit dazwischen liegenden Schnappscheiben und/oder Kontaktpillen, unter Ausbildung eines Schalters aufgelegt und mit der Leiterplatte wenigstens indirekt verbunden wird.

Um solche Betätigungsstössel können im Träger weitere Stössel oder eine umlaufende Ring als Überlastschutz für Schnappscheiben ausgeformt sein. Zudem kann der Träger harte Verstärkung für harte Oberflächen-Bereiche Nicht-Tastenbereich aufweisen. Generell ist es möglich, auf der Oberfläche der Oberflächenschicht eine zusätzliche transparente Schutzschicht vorzusehen, die Schutzschicht kann auch nur teilweise transparent sein um beispielsweise eine Hinterleuchtung nur an speziellen Stellen zu ergeben.

Generell können im Bereich der Leiterplatte und/oder im Bereich des Trägers Beleuchtungselemente vorgesehen werden. So beispielsweise in Form von Lichtleitern (beispielsweise Lichtleiterfolien) und/oder Lichtabschirmungen und/oder Hinterleuchtungen, vorzugsweise unter Zuhilfenahme von LED, ein Lichtleitfolien oder EL Folien.

Wie bereits erwähnt ist es möglich, wenn Folien eingesetzt werden, diese Folien zu dekorieren, wobei diese Dekoration vor dem Tiefziehen einer Folie und/oder vor respektive nach der Ausbildung der Oberflächenschicht erzeugt werden kann. Zudem ist es möglich, auf und/oder in der äußeren Oberfläche der Oberflächenstruktur eine Oberflächendekoration und/oder dekorative Einlegeteile vorzusehen. Letztere können beispielsweise auch in der Pressform eingelegt werden und so mit der Vergussmasse verbunden werden.

Bevorzugtermassen ist die Innenfläche der Pressfonn für die Vergussmasse, wenigstens in deren ausgehärteten Form, nicht-haftend ausgebildet ist.

Für eine optimale Führung des Prozesses kann es zudem vorteilhaft sein, wenn die Pressform Führungselemente für die Führung des Gegenstempels während der Einführung des Gegenstempels in die Kavität der Pressform aufweist.

Des weiteren betrifft die vorliegende Erfindung eine flexible, dreidimensionale Überzugsstruktur aus einer transparenten ausgehärteten Vergussmasse, mit einer vorderseitigen Oberflächenwölbung und einer rückseitigen Vertiefung für einen flexiblen Schalter oder eine flexible Bedieneroberfläche, respektive als Bestandteil eines solchen Funktionselements, hergestellt in einem Verfahren, wie es oben dargestellt wurde.

Weiterhin betrifft die vorliegende Erfindung die Verwendung einer solchen Überzugsstruktur respektive eines solchen Schalters und/oder einer solchen Bedieneroberfläche mit einer solchen Überzugstruktur als Bedieneinheit in der Mittelkonsole von Autos, Bestandteil eines Autoradios, Klimagerät, als Lenkradschalter, als Bestandteil eines Türgriffs mit integrierten Tasten, als Bestandteil einer Computer-Maus, als Bestandteil einer Spielkonsole, als Bestandteil einer Tastatur für Mobiltelefone und Tischtelefone.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Schnittdarstellung eines Schalteraufbaus mit mehreren Tasten, wobei in a) eine Variante mit weichem elastischem Träger und in b) eine Variante mit hartem Träger dargestellt ist;
- Fig. 2: zwei der Verfahrensschritte in schematischer Darstellung, wobei in a) die Pressfonn mit Vergussmasse und in b) die Pressform mit eingeführtem Gegenstempel dargestellt ist;
- Fig. 3: die einzelnen Verfahrensschritte bei einem Verfahren, bei welchem die Oberflächenschicht laminiert wird;
- Fig.4: die einzelnen Verfahrensschritte bei einem Verfahren, bei welchem der Träger dekoriert wird;
- Fig.5: die einzelnen Verfahrensschritte bei einem Verfahren, bei welchem zwei Folien laminiert werden;
- Fig. 6: die einzelnen Verfahrensschritte bei einem Verfahren, bei welchemn die Folie von hinten dreidimensional dekoriert wird;
- Fig. 7: die einzelnen Verfahrensschritte bei einem Verfahren, bei welchem die Folie durch die Dekoration hindurch ausgehärtet wird; und
- Fig. 8: die einzelnen Verfahrensschritte bei einem Verfahren, bei welchenm die Dekoration auf der Oberflächenschicht vorgesehen wird; und
- Fig. 9: die einzelnen Verfahrensschritte bei einem Verfahren, bei welchem die Dekoration auf der Oberflächenschicht vorgesehen wird.

### BESCHREIBUNG BEVORZUGTER AUSFÜHRUNGSFORMEN

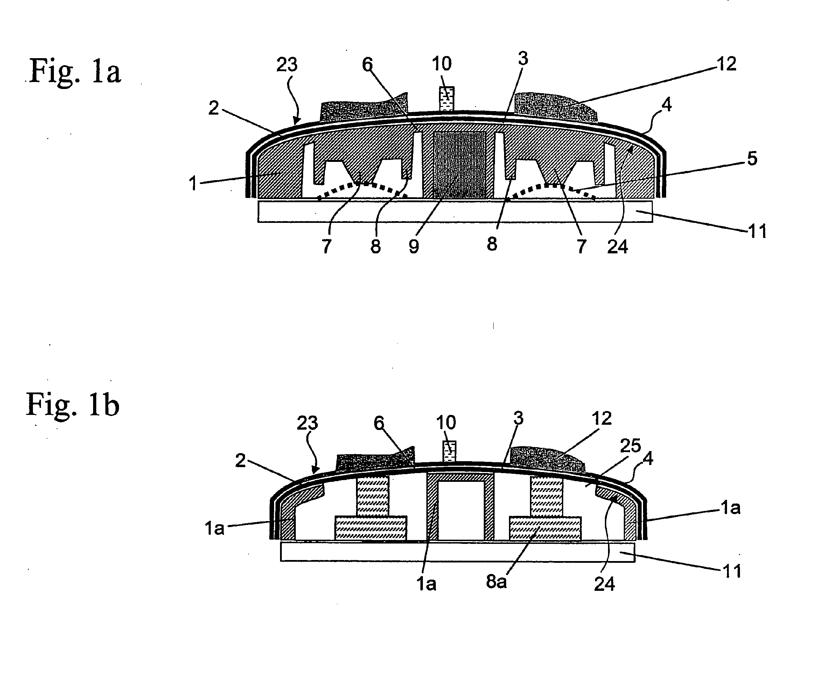

Figur 1a zeigt den Aufbau einer Bedienoberfläche in einer schematischen Schnittdarstellung. Auf einem Träger 1 aus transparentem elastischem Material (z.B.Silikon) ist eine dreidimensional verformte flexible & transparente Folie 2 angeordnet und mit dem Träger üblicherweise stoffschlüssig verbunden. Auf der Folie 2 ist eine Dekorationsschicht 3 aus Oberflächenfarbe, beispielsweise in Form von Symbolen, und Effekte, vorgesehen. Die Dekorationsschicht kann entweder auf der dem Träger 1 zugewandten Seite der Folie 2 vorgesehen sein, sie kann aber auch auf der anderen Seite vorgesehen sein. Zudem kann eine Dekorationsschicht auch auf der Oberfläche des Trägers 1, die der Folie 2 zugewandt ist, angeordnet sein. Ebenfalls ist es möglich, eine Dekoration auf der Oberfläche der Oberflächenschicht 4 vorzusehen.

Auf der Folie 2 und mit dieser verbunden folgt eine Oberflächenschicht 4 mit angeformten Tasten 12 und Oberflächenstruktur. Diese Oberflächenschicht 4 ist aus einer transparenter Vergussmasse hergestellt.

Unterhalb des Trägers 1 sind auf einer Leiterplatte 11 mit elektrischen Gegenkontakten und LED's für Hinterleuchtung Schnappscheiben 5 für Tastenhaptik und elektrischen Kontakt vorgesehen. Alternativ oder zusätzlich können Kontaktpillen vorgesehen sein. Dies jeweils unterhalb eines Betätigungsstössel 7, welcher aus dem Material des Trägers 1 geformt ist und über eine Membran 6 beweglich ist. Um einen solchen Stössel kann optional ein Überlastschutzring 8 für die Schnappscheibe 5 vorgesehen sein. Zudem ist es möglich, eine harte Verstärkung 9 dem Träger für jene Bereiche vorzusehen, wo die Gesamtstruktur nicht weich sein soll.

Dekorative Einlegeteile 10 z.B. aus Kunststoff oder Metall können zudem auf der Oberfläche respektive wenigstens teilweise in die Oberfläche der Oberflächenschicht 4 integriert vorgesehen sein.

Die transparente Folie 2 wird durch Tiefziehen verformt, um eine dreidimensionale Bedienteil-Oberfläche abzubilden. Über der Folie 2 wird mittels einer transparenten Vergussmasse eine Oberflächenschicht 4 mit einer gewünschten Oberflächenstruktur (z.B matt oder poliert) und angeformten Tasten 12 angebracht. Die Dekorationsschicht 3, z.B. auf der Rückseite der Folie 2, lässt Oberflächenfarben und Symbole entstehen. Die Folie 2 wird auf dem elastischen Träger 1 fixiert. Der Träger 1 wird wiederum über einer Leiterplatte 11 platziert. In den Bereichen der Tasten ist im Träger eine Membrane 6 ausgeformt, sodass sich die Taste jeweils individuell betätigen lässt. Unter den Tasten befinden sich Schnappscheiben 5 für die Tastenhaptik und das elektrische Schalten. Die Schnappscheiben werden mittels im Träger 1 angeformter Betätigungsstössel 7 aktiviert und optional durch den Überlastschutzring 8 vor Missbrauchskräften geschützt. LEDs (nicht dargestellt) können zur Hinterleuchtung der Bedienoberfläche verwendet werden. In den elastischen Träger 1 können zusätzliche Verstärkungen 9 eingebracht werden, um die Oberfläche im Nicht-Tastenbereich härter zu machen. Dekorative Einlegeteile 10 können durch einlegen in die Form direkt mit der Vergussmasse in der Oberflächenschicht 4 angebracht werden oder nachträglich zusammengefügt respektive angeklebt werden.

Der Träger 1 sollte folgende Funktionen erfüllen:
- 1.: Feste Basis für Folie, um in den Bereichen ohne Tasten eine möglichst harte und feste Oberfläche zu erzeugen
- 2.: Flexible Membrane 6 im Bereich der Tasten, Um einen Tastenhub zu erzeugen.
- 3.: Aktuator für Schnappscheibe 7 und Überlastschutzring 8 (beides kann auch in separatem Teil gelöst werden oder z.B. durch einen Tactswitch ersetzt werden)
- 4.: Transparentes Grundmaterial für eine Hinterleuchtung der Symbole (LED's auf Leiterplatte sollten wenigstens teilweise durchleuchten können)
- 5.: Lichtabschottung z.B. für Funktionsbeleuchtungen durch nicht-transparente Bereiche
- 6.: Befestigungsmöglichkeiten in einem Gehäuse

Der Träger 1 wird idealerweise aus Silikon oder ähnlichen elastischen und transparenten Materialien wie TPE (Thermoplastic Elastomer) oder TPU gefertigt. Der Membranbereich wird dabei dünn gestaltet, typischerweise 0.3mm dick und 1mm umlaufend um die Tastengeometrie. Der Silikonträger kann mit einem harten Kunststoffteil 9 zusätzlich verstärkt werden, sodass dort eine harte Oberfläche entsteht.

Alternativ dazu kann, wie dies anhand von Figur 1b gezeigt wird, der Träger 1a aus einem im wesentlichen harten Kunststoff bestehen (hart im Sinne von: kann bei bestimmungsgemäßer Manipulation im wesentlichen nicht zusammengepresst werden). Anstelle einer Membrane weist ein solcher Träger 1a jeweils eine Aussparung 25 um den jeweiligen Tastenbereich auf. Die eigentliche flexible Membrane wird dann nur aus der Folie 3 mit der Oberflächenschicht 4 gebildet. Unterhalb dieser Membran befindet sich dann typischerweise ein Mikroschalter oder eine Schaltmatte 8a.

Der Träger 1 kann entweder direkt hinter die Folie gespritzt oder gemoldet werden (sogenanntes In Mould Decoration Verfahren) oder er wird separat gefertigt und mittels einer Klebeschicht an der Folie befestigt.

Die Dekoration (Oberflächenfarbe, Symbole etc) kann alternativ zum Aufdruck auf die Folie 2 auch auf dem Träger 1 aufgedruckt oder gesprayed und gelasert werden (Night Design Verfahren).

Die Folie 2 sollte folgende Eigenschaften aufweisen:
- 1.: Transparenz um Dekoration sichtbar zu machen
- 2.: Verformbar/Tiefziehbar z.B. im Thermo- oder High Pressure Forming Verfahren
- 3.: Flexibel um die Tastenfunktion (Hub) zu gewährleisten
- 4.: Bedruckbar für Dekoration

Die Folie 2 kann eine zusätzliche kratzfeste Beschichtung aufweisen, um in Bereichen, wo keine Oberflächenschicht 4 vorhanden ist, die Folie 2 zu schützen.

Die Folie 2 sollte für das bevorzugte Herstellverfahren der Oberflächenschicht durch UV Aushärten für UV-Licht transparent sein.

Bei einem flachen Keypad wird die Folie 2 nach dem Aufbingen der Oberflächenschicht 4 auf der Rückseite bedruckt mittels Siebdruck. Beim dreidimensionalen Verfahren funktioniert das üblicherweise nicht, weil die Folie 2 nicht mehr flach ist und Siebdruck normalerweise nur auf flachen Teilen möglich ist. Das ist eine der Hauptschwierigkeiten, welche mit dieser Erfindung gelöst wird.

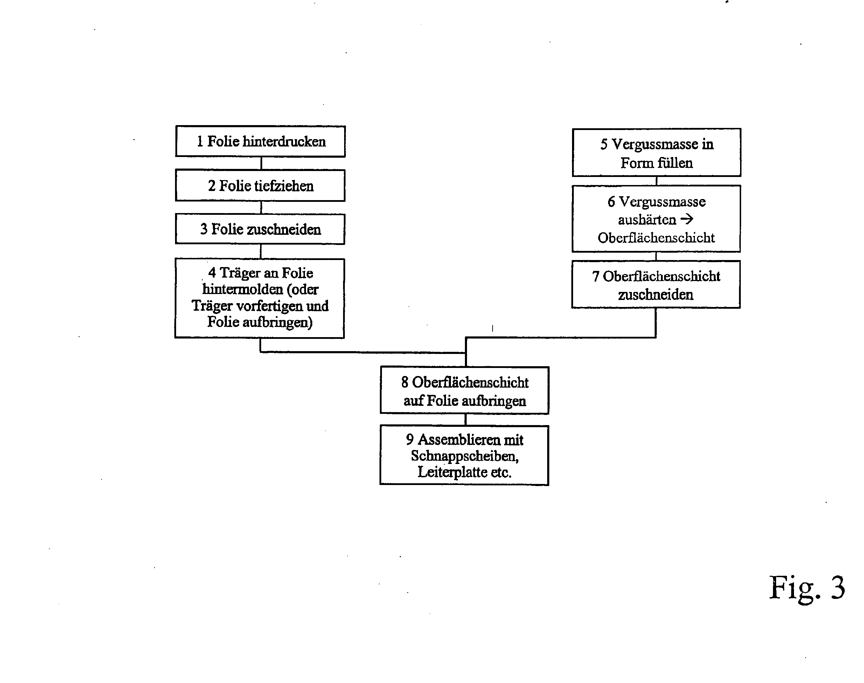

Folgende Verfahren (vergleiche Figuren 3-8) zum Dekorieren der Bedienoberfläche sind entsprechend ebenfalls Bestandteil dieser Erfindung:

Verfahren 1 (vergleiche Figur 3), hier wird die Oberflächenschicht laminiert: Die Folie 2 wird mittels Siebdruck in flachem Zustand hinterdruckt (Schritt 1), dann verformt (Schritt 2), zugeschnitten (Schritt 3) und der Träger von hinten auf die Folie 2 gemoldet respektive vorgefertigt und von hinten auf die Folie aufgebracht (Schritt 4). Am Schluss wird eine vorgefertigte Oberflächenschicht (Schritte 5-7) über der Folie 2 befestigt (Schritt 8, z.B. mit transparentem UV Kleber von oben ausgehärtet). Anschließend wird der Rest des Schalters zusammengefügt (Schritt 9).

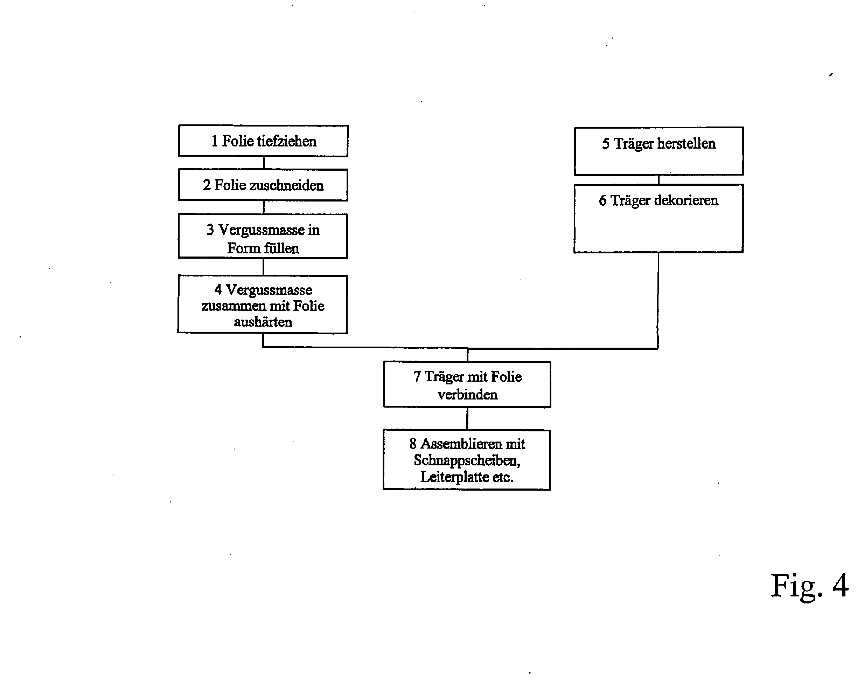

Verfahren 2 (vergleiche Figur 4), hier wird der Träger 1 dekorieren: die Folie wird tiefgezogen (Schritt 1) und anschließend zugeschnitten (Schritt 2). Die Vergussmasse 14 (vergleiche weiter unten) wird in die Pressform gefüllt (Schritt 3), der Gegenstempel eingeführt und ausgehärtet zusammen mit der Folie (Schritt 4). Daneben wird der Träger hergestellt (Schritt 5) und die Dekoration wird an der Oberfläche des Trägers angebracht ( Schritt 6, Siebdruck, Spray, lasern etc wie z.B. bei einem herkömmlichen Silikonteil). Dann wird der Träger mit der Folie verbunden (Schritt 6) und es wird der Rest des Schalters zusammengefügt (Schritt 8). Somit kann die transparenete Folie im UV Verfahren mit der Vergussmasse zusammengebracht werden in einem Schritt.

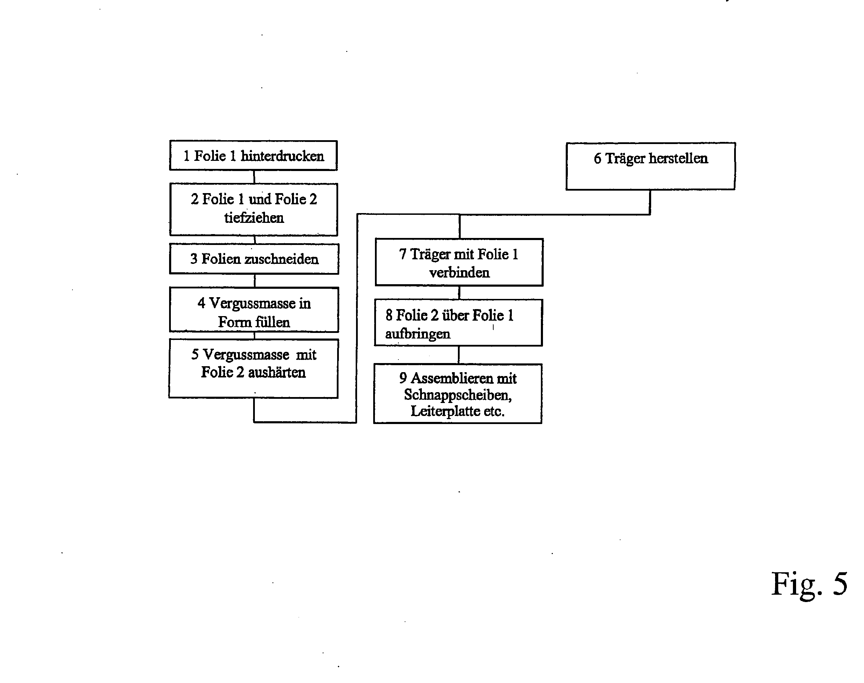

Verfahren 3 (vergleiche Figur 5), hier werden zwei Folien laminiert: Es werden 2 Folien hergestellt, die erste mit der Dekoration (Folie 1), die Dekoration wird dabei auf die flache Folie aufgebracht (Schritt 1) eine zweite Folie (Folie 2) wird für die Verbindung mit der Vergussmasse (transparente Folie, lässt UV Aushärtung zu) vorgesehen. Beide Folien werden tiefgezogen (Schritt 2), zugeschnitten (Schritt 3), und die zweite Folie nach dem Einfüllen der Vergussmasse in die Form (Schritt 4) nach einführen des Gegenstempels in die Pressform zusammen mit der Vergussmasse ausgehärtet (Schritt 5). Parallel dazu wird ein Träger hergestellt (Schritt 6) und mit der ersten dekorierten Folie verbunden (Schritt 7) oder aber direkt hinter der ersten Folie ausgeformt. In einem nächsten Schritt (8) werden die beiden Folien ineinander gefügt und miteinander verbunden. Es folgen die üblichen weiteren Schritte zur Herstellung eines eigentlichen Schalters (Schritt 8)..

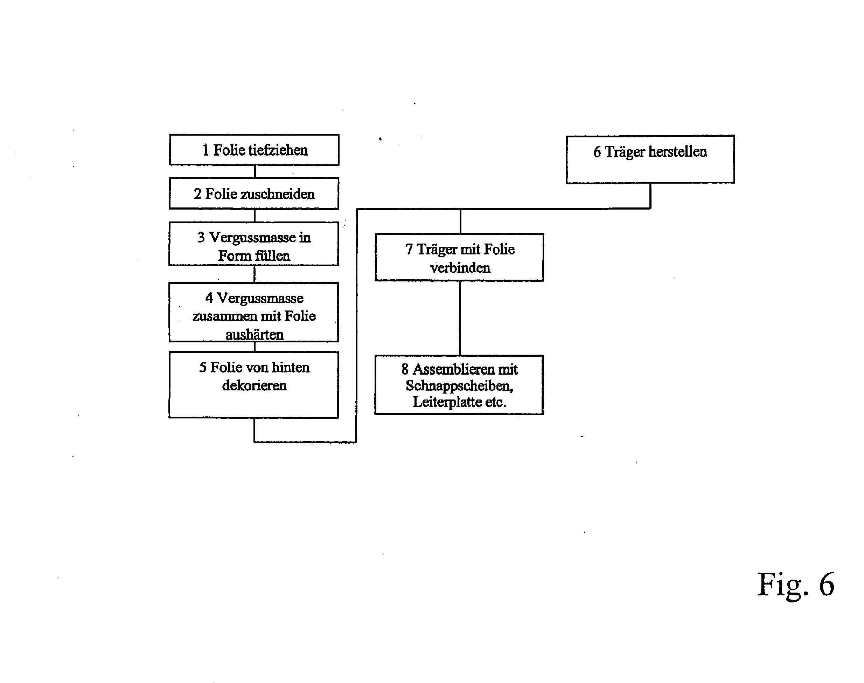

Verfahren 4 (vergleiche Figur 6), hier wird die Folie von hinten dreidimensional dekoriert: die Folie wird tiefgezogen (Schritt 1) und anschließend zugeschnitten (Schritt 2). Die Vergussmasse 14 (vergleiche weiter unten) wird in die Pressform gefüllt (Schritt 3), der Gegenstempel eingeführt und ausgehärtet zusammen mit der Folie (Schritt 4). Die verformte Folie wird anschließend von innen her z.B. mittels Spray, Tampondruck und Laser dekoriert (Schritt 5). Daneben wird ein Träger hergestellt (Schritt 6), dann der Träger mit der Folie und der darauf angeordneten Oberflächenschicht verbunden (Schritt 7), es folgen die üblichen weiteren Schritte zur Herstellung eines eigentlichen Schalters (Schritt 8).

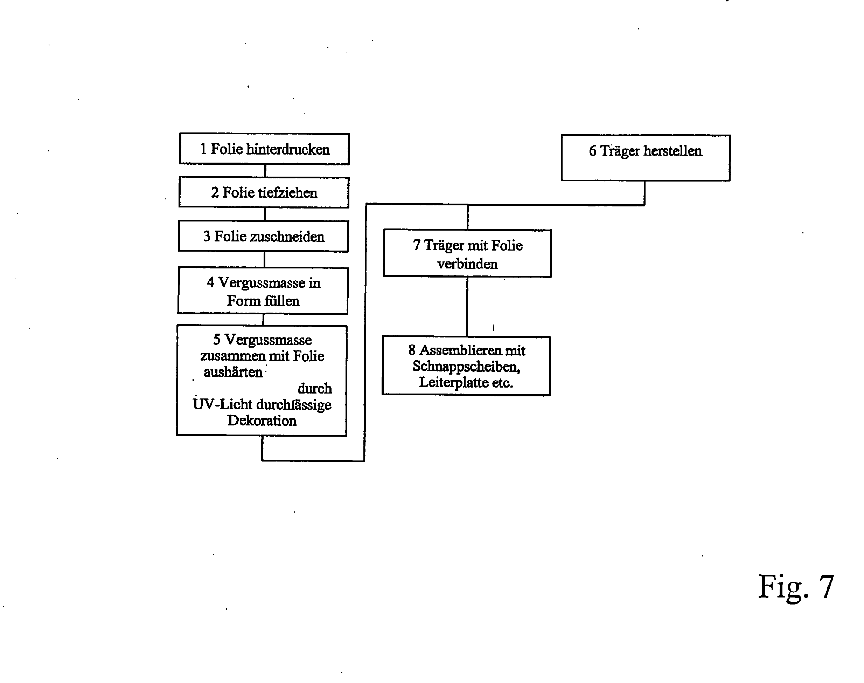

Verfahren 5 (vergleiche Figur 7), hier wird die Folie durch die Dekoration hindurch ausgehärtet: in einem ersten Schritt wird die Folie in flachem Zustand bedruckt, zum Beispiel im Siebdruck (Schritt 1) und anschließend tiefgezogen (Schritt 2) und zugeschnitten (Schritt 3). Die Vergussmasse wird in die Form gefüllt (Schritt 4) und anschließend der Gegenstempel und die Folie in die Form eingeführt und die Vergussmasse zusammen mit der Folie ausgehärtet (Schritt 5). Dabei wird UV-Einstrahlung durch den für UV-Strahlung durchlässigem Gegenstempel eingestrahlt, die Dekoration ist in diesem Fall ebenfalls UV-durchlässig (entweder entsprechende Druckfarbe oder entsprechende Verteilung der Auftragung der Druckfarbe). Daneben wird ein Träger hergestellt (Schritt 6), anschließend dieser Träger mit der dekorierten Folie und darauf angeordneten Oberflächenschicht verbunden (Schritt 7), es folgen die üblichen Schritte zur Herstellung eines Schalters (Schritt 8).

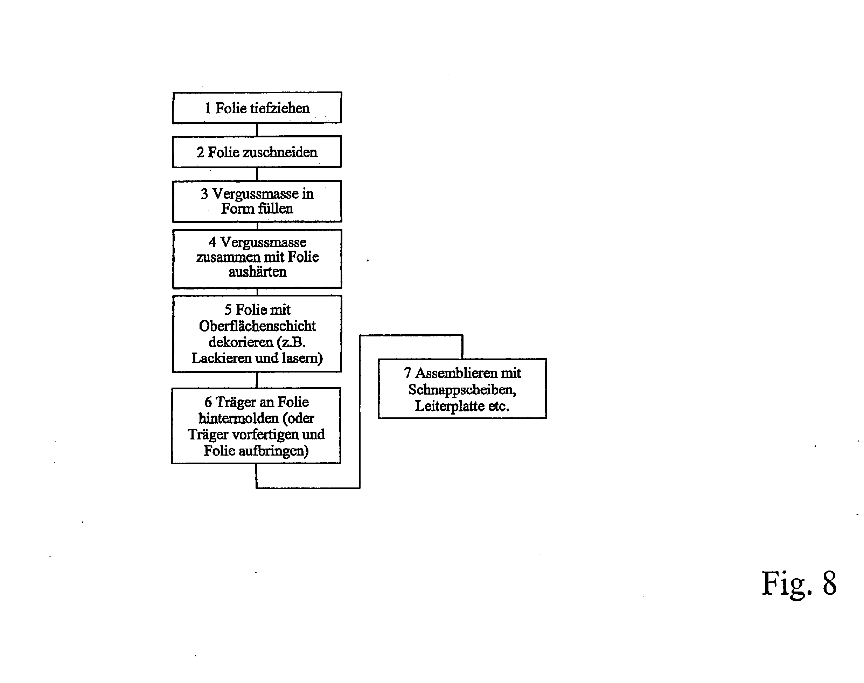

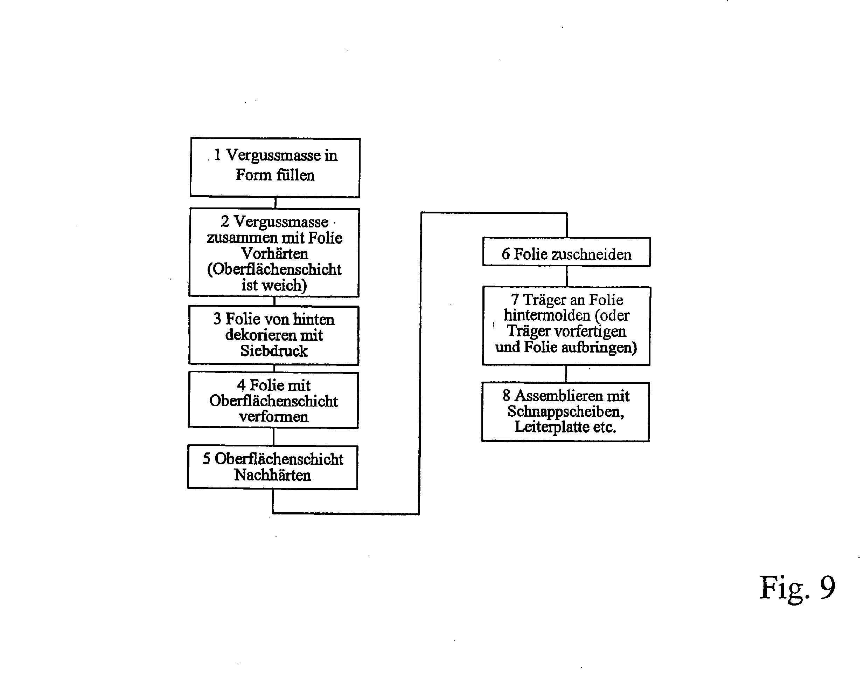

Verfahren 6 (vergleiche Figur 8), hier wird die Dekoration auf der Oberflächenschicht vorgesehen: die Folie wird tiefgezogen (Schritt 1) und anschließend zugeschnitten (Schritt 2). Die Vergussmasse 14 (vergleiche weiter unten) wird in die Pressform gefüllt (Schritt 3), der Gegenstempel eingeführt und ausgehärtet zusammen mit der Folie (Schritt 4). Das ganze Teil wird transparent hergestellt und ganz am Schluss an der Oberfläche dekoriert (Schritt 5) mittels Siebdruck, Tampondruck, Spray, Lasern etc.. Zusätzlich kann noch eine transparente Lackschicht zum Schutz angebracht werden. Anschließend wird der Träger direkt auf der Rückseite der Folie ausgeformt (Schritt 6) oder vorgefertigt und in die Rückseite eingeführt, und es folgen die üblichen Schritte zur Herstellung des Schalters. Verfahren 7 (vergleiche Figur 9), hier wird die Vergussmasse 14 in zwei Stufen ausgehärtet, und zwar in einem ersten Schritt zusammen mit der Folie vorgehärtet und erst nach der Dekoration der Folie in die definitive dreidimensionale Form gebracht und anschließend nachgehärtet, das heißt vollständig ausgehärtet. Die Oberflächenschicht wird also auf die transparente Folie aufgebracht (Schritt 1) und "vorgehärtet" (Schritt 2), bleibt aber noch sehr flexibel. Dann wird die Folie hinterdruckt für die Dekoration (Schritt 3). Erst jetzt wird die ganze Folie zusammen mit der noch weichen Oberflächenschicht dreidimensional verformt (Schritt 4) und die Oberflächenschicht wird dann ganz nachgehärtet (Schritt 5). Die Vor- und/oder Nachhärtung kann mittels UV erfolgen.

Die Vergussmasse für die Erstellung der Oberflächenschicht 4 ist einer der wichtigsten Werkstoff dieser Erfindung. Die Oberflächenschicht 4 dient zum einen dazu, um eine gewünschte dreidimensionale Oberflächenstruktur zu generieren (Abbild der Werkzeugoberfläche). Zum anderen können mit der Vergussmasse 14 alle möglichen gewünschten Strukturen auf der Oberfläche angebracht werden wie Tastenformen 12 oder Trennstege etc,. Typischerweise geschieht dies innerhalb einer Dicke von 0.1 - 2.0 mm. Diese Oberflächenschicht 4 kann durchgehend über die ganze Oberfläche sein oder auch nur in Teilbereichen. Die Oberflächenschicht 4 hat typischerweise wenigstens eine, vorzugsweise alle der folgenden Eigenschaften:
- 1.: Transparenz um Dekoration sichtbar zu machen
- 2.: Gute Haftung auf Folie
- 3.: Gute Abriebbeständigkeit
- 4.: Hohe Kratzfestigkeit
- 5.: Kein Vergilben
- 6.: Elastisch um im Membranbereich den Tastenhub zu ermöglichen
- 7.: Lackierbar für Verfahren gemäß Figur 8

Im Gegensatz zu Tasten nach dem Stand der Technik können mit einer solchen Oberflächenschicht 4 die Tasten auch scharfkantig sein und sehr nahe beieinander liegen. Ebenfalls unterschiedliche Oberflächenstrukturen sind mit einer herkömmlichen Folie allein nicht realisierbar.

Falls mittels der Vergussmasse 14 die Kratzfestigkeit oder andere Eigenschaften der Oberflächenschicht 4 nicht genügend gut erzielt werden können, kann eine zusätzliche transparente Beschichtung der Oberflächenschicht 4 dies erzielen. Dabei muss diese Beschichtung die Tastenfunktion immer noch ermöglichen und darf unter Belastung z.B. nicht brechen.

Ein zusätzlicher dekorativer Effekt kann erzielt werden, indem in das Werkzeug mit der Struktur für die Oberflächenschicht 4 dekorative Teile 10 eingelegt werden vor dem Einfüllen der Vergussmasse 14.

So können z.B. Zierstege aus Metall oder Kunststoff in die Tasten eingebracht werden. Ein weiterer Effekt kann mittels Anbringung einer Linsenstruktur in die Oberflächenschicht erzielt werden, so können einzelne Bereiche optisch hervorgehoben werden, insbesondere auch unter der Einwirkung von Beleuchtung von hinten oder von vom.

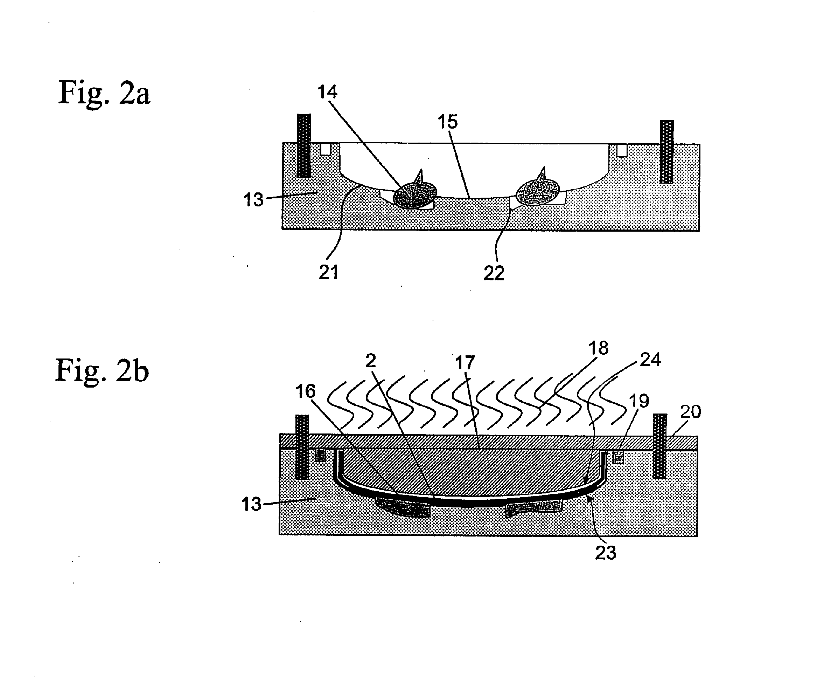

Die Herstellung der Oberflächenschicht 4 soll anhand der Figur 2 näher erläutert werden. In Figur 2a ist das Werkzeug für die Oberflächenschicht im offenen Zustand dargestellt. Das Werkzeug 13 verfügt dabei über eine Vertiefung 15 mit einer Oberfläche, an der die Vergussmasse 14 (in Figur 2a frisch eingefüllt aber noch nicht verstrichen) für die Oberflächenschicht nicht haftet (z.B. Stahl mit anti-haft Beschichtung oder Silikon). In der Vertiefung ist einerseits die Ausformung der Oberflächenwölbung 21 über die ganze Form ausgebildet, und innerhalb dieser großen Ausformung sind kleine Ausformungen 22 vorgesehen, welche anschließend die Tastenbereiche 12 oder Stege oder Ähnliche über die Oberfläche der Oberflächenschicht 4 hervortretende Bereiche ausbilden.

In Figur 2b ist das Werkzeug 13 für die Oberflächenschicht im geschlossenen Zustand dargestellt. In das Werkzeug 13 (Female) ist nun die Vergussmasse nicht nur eingefüllt, sondern auch in Form gequetscht und im Spalt zwischen dem Gegenstempel 17 oder Anpressstössel (Male) verteilt. Zwischen Gegenstempel 17 ist zudem eine UVdurchlässige Folie 2 angeordnet. Vorzugsweise besteht der Gegenstempel 17 zum Beispiel aus Polycarbonat und ist für UV-Licht durchlässig.

Mit anderen Worten wird eine vorgeformte Folie 2 beispielsweise auf dem Gegenstempel 17 aufgesetzt und der Gegenstempel 17 unter Zuhilfenahme der Führungselement 20, die am Werkzeug 13 vorgesehen sind und beispielsweise in Führungsöffnungen in einer Platte des Gegenstempel des eingreifen, in die Vertiefung 15 des Werkzeugs 13 eingeführt, wobei die Vergussmasse, die zu diesem Zeitpunkt noch nicht-elastisch verformbar und im wesentlichen fliessfähig ist, sich im Spalt verteilt und alle möglichen Hohlräume ausfüllt. Gegebenenfalls kann ein Überlaufkanal 19 vorgesehen werden, um überschüssige Vergussmasse 14 abzuführen. Die endgültige Form ist in diesem Zustand in der Vergussmasse 16 abgeformt aber die Vergussmasse ist immer noch fliessfähig. Entsprechend wird anschließend eine UV Lichtquelle zum Aushärten der Vergussmasse eingeschaltet, so dass das UV-Licht durch den Gegenstempel 17 und durch die Folie 2 hindurch auf die ausgeformte Vergussmasse 16 treffen kann und in dieser die Aushärtung auslösen kann.

Es werden hier in der Hauptsache Verfahren beschrieben, bei welchen die Vergussmasse durch Einwirkung von UV Licht aushärtet.

Die Oberflächenschicht 4 kann entweder in einem separaten Prozess hergestellt werden und dann auf die Folie 2 aufgebracht werden (Verfahren 1) oder sie kann direkt während des Formprozesses mit der vorgeformten Folie verbunden werden (Verfahren 2-6). Es ist auch möglich, die Oberflächenschicht auf die flache Folie aufzubringen und dann gemeinsam mit dieser in die dreidimensionale Geometrie zu verformen.

Das Werkzeug 13 mit der Aussenform für die Tastengeometrie und der Oberflächenstruktur ist typischerweise aus Stahl gefertigt mit einer Anti-Haft-Beschichtung, sodass die Vergussmasse 14/16 nicht im Werkzeug haften bleibt. Das Werkzeug 13 kann aber auch aus Silikon oder anderem Material bestehen. Das Material des Werkzeugs kann transparent sein, um die Einstrahlung von UV Licht durch die Form zu ermöglichen, z.B. aus transparentem Silikon oder aus Glas. Silikonwerkzeuge können in grosser Menge einfach hergestellt werden und haben den Vorteil, dass die Vergussmasse nicht haftet.

Der Viskosität der Vergussmasse 14 kommt eine besondere Bedeutung zu. Mit einer hohen Viskosität bleibt die Vergussmasse in der dreidimensionalen Form stehen, muss aber doch leicht einbringbar sein. Mittels eines elastischen Spachtels kann die Vergussmasse 14 vor der Einführung des Stempels 17 möglichst gleichmässig im Werkzeug vor verteilt werden. Dann wird die bereits tiefgezogene Folie 2 auf den Anpressstössel 17 aufgebracht. Durch Anpressung über den Anpresssstössel 17 wird die Vergussmasse 14 in die richtige Position gequetscht und dann mittels UV Licht 18 ausgehärtet. Die Führung 20 stellt sicher, dass der Gegenstempel 17 und die Folie 2 in der richtigen Position zu liegen kommen.

Als Gegenstempel 17 eignet sich Polycarbonat, andere Materialien wie Silikon, Glas oder Materialkombinationen sind aber auch möglich, so beispielsweise mit Silikon beschichtetes Polycarbonat.

Bei einer tiefen Viskosität der Vergussmasse wird diese nur durch die Anpressung des Anpressstössels 17 in die Form gequetscht. Dabei ist ein Überlaufkanal 19 im Werkzeug hilfreich.

Bei einem weiteren möglichen Verfahren entfällt die Folie und die Vergussmasse härtet direkt zwischen Werkzeug 13 und Anpressstössel 17 aus. In diesem Fall sollte natürlich auch der Anpressstössel 17 eine für die Vergussmasse 14 nicht haftende Oberfläche aufweisen.

Allenfalls kann das Werkzeug unter Vakuum geschlossen und ausgehärtet werden, um Lufteinschlüsse zu vermeiden.

Assembly: Die einzelnen Schichten können, sofern sie nicht im Herstellungsschritt vereint wurden, mittels herkömmlichen Mitteln zusammengefügt werden wie Klebefolie, Kleber (z.B. UV Kleber) oder Verpressen.

Hinterleuchtung: Die Hinterleuctung der Tasten oder Ausleuchtung einzelner Flächen oder Funktionsbeleuchtung kann mittels normalen LEDs realisiert werden. Es ist aber auch möglich bei flachen Strukturen eine Lichtleitfolie oder EL Folien zu verwenden. Schnappscheiben: Um eine taktile Rückmeldung der Tastenbetätigung zu erhalten wird eine Schnappscheibe 5 unter dem Träger 1 angebracht. Betätigungskraft und Snap kann durch Auswahl der Schnappscheibe 5 beinflusst werden. Die Schnappscheibe 5 kann entweder direkt in den Träger 1 integriert werden oder als Metaldome-Array an den Träger 1 oder die Leiterplatte 11 befestigt werden. Die Schnappscheibe 5 wird über einen im Träger angeformten Betätigungsstössel 7 aktiviert.

Als Überlastschutz kann an dem Betätigungsstössel 8 ein äusserer Überlastschutzring 8 angebracht werden, sodass beim übermäßigen herunter drücken der Taste nicht die volle Kraft auf die Schnappscheibe 5 geht, sondern durch den Ring 8 zumindest teilweise abgefangen wird.

Es können auch Schnappscheiben 5 mit einem mittigen Loch für eine zentrische LED-Beleuchtung verwendet werden.

Anstelle von Schnappscheiben 5 können in den Stössel 7 des Trägers 1 auch Kontaktpillen eingelegt werden. Bei einem kurzen Hub von ca. 0.2mm reagieren diese auf geringen Druck und bilden so Touchtasten.

Es sind auch andere Systeme zur Betätigungserkennung möglich wie kapazitive Tasten oder deren Kombination parallel oder in Serie.

Als mögliche Vorteile lassen sich unter anderem folgende Aspekte angeben:

Eine dreidimensional geschwungene Bedienoberfläche
- ohne Spalten zwischen Tasten
- mit beweglichen Tasten mit taktilem Feedback
- mit angeformten Tasten und Stegen auch mit scharfen Kanten in beliebiger Form
- mit beliebigen Oberflächenstrukturen
- mit integrierten Zierteilen aus Kunststoff, Metall oder anderen Materialien
- mit Hinterleuchtung und Funktionsbeleuchtung
- mit flachem Aufbau
- mit reduzierten Bauteilen

Beispielhafte Anwendungen der vorgeschlagenen Struktur sind wie folgt: Bedieneinheit in der Mittelkonsole von Autos; Autoradio, Klimagreät etc; Lenkradschalter; Türgriff mit integrierten Tasten; Computer-Maus; Spielkonsolen; Tastatur für Mobiltelefone und Tischtelefone. In derartige Vorrichtungen an die vorgeschlagene Struktur integriert sein.

Zusammenfassend lassen sich folgende Aspekte der Erfindung festhalten: Vorgeschlagen wird eine Bedienoberfläche aus einer verformten (nicht flachen) Folie, welche auf der Oberseite mittels einer Oberflächenschicht zusätzlich angeformte Strukturen aufweist.

Vorgeschlagen wird weiterhin ein Verfahren zur Dekoration einer Bedienoberfläche aus einer solchen verformten Folie. Dabei insbesondere ein Verfahren zur Herstellung der Oberflächenschicht auf der Bedienoberfläche aus einer solchen verformten Folie mittels dem beschriebenen Werkzeug mit UV-Licht durchlässigen Anpressstössel. Vorgeschlagen wird eine solche Bedienoberfläche, welche auf einem Träger aus transparentem elastischem Material aufgebracht ist. Der Träger kann dabei auf der Unterseite der Tasten Schnappscheiben oder Kontaktpillen aufweisen für Tastenhaptik und elektrischen Kontakt. Der Träger kann eine um die Tastengeometrie umlaufende Membrane aufweisen, um den Tastenhub zu ermöglichen. Der Träger kann einen Betätigungsstössel für eine Schnappscheibe oder eine leitende Kontaktpille aufweisen, um einen Kontakt auszulösen. Der Betätigungsstössel kann einen Ring als Überlastschutz für die Schnappscheibe aufweisen. Der Träger kann einen Tact-Switch oder andere Kontakttechnologie betätigen. Der elastische Träger kann mit einer harten Verstärkung kombiniert werden, um eine harte Oberfläche im nicht-Tastenbereich zu erzeugen. Der Träger kann Lichtleiter oder Lichtabschirmungen aufweisen, um Funktionsbeleuchtungen zu realisieren. In der Oberflächenschicht können dekorative Einlegeteile angebracht sein. Weiterhin wird eine Folie für eine solche Bedienoberfläche vorgeschlagen, wobei die Folie eine kratzfeste oder antifingerprint Beschichtung aufweist, um die Stellen, wo sich keine Oberflächenschicht befindet, zu schützen.

Weiterhin wird eine Oberflächenschicht für eine solche Bedienoberfläche vorgeschlagen, wobei diese in gewünschter Dicke, Form und Struktur aufgebracht sein kann als geschlossene Fläche oder nur in einzelnen Bereichen. Dabei kann die gesamte Schicht mit einer transparenten Schutzschicht versehen sein, z.B. um Kratzfestigkeit zu erhöhen, zudem kann in die Oberfläche eine Linsenstruktur eingebracht sein, um optische Linseneffekte zu erzielen.

### BEZUGSZEICHENLISTE

- 1: Träger, aus transparentem elastischem Material (z.B.Silikon)
- 1 a: Träger aus hartem Kunststoff mit Aussparungen im Tastenbereich
- 2: Folie, dreidimensional verformt, flexible und transparent
- 3: Dekorationsschicht, für Oberflächenfarbe, Symbole, und/oder Effekte
- 4: Oberflächenschicht, aus transparenter Vergussmasse
- 5: Schnappscheibe, für Tastenhaptik und elektrischen Kontakt
- 6: Membrane, in Träger für Tastenbetätigung
- 7: Betätigungsstössel, für Schnappscheibe
- 8: Überlastschutzring, für Schnappscheibe (optional)
- 8a: Mikroschalter oder Schaltmatte
- 9: Verstärkung, harte, in Träger, optional
- 10: dekorative Einlegeteile, z.B. aus Kunststoff oder Metall
- 11: Leiterplatte, mit elektrischen Gegenkontakten und LED's für Hinterleuchtung
- 12: dreidimensionale Oberflächenstruktur, in 4 ausgeformt
- 13: Pressform, vorzugsweise mit für die Vergussmasse nicht- haftender Oberfläche
- 14: Vergussmasse, vor Formgebung
- 15: Vertiefung, Innenform von 13
- 16: Vergussmasse, nach Formgebung
- 17: Gegenstempel, für UV-Licht durchlässig
- 18: UV-Einstrahlung
- 19: Überlaufkanal für überschüssige Vergussmasse
- 20: Führung für Gegenstempel
- 21: Ausformung der in Oberflächenwölbung in 13
- 22: Ausformung der einzelnen Tastenform in 13
- 23: vorderseitige Oberflächenwölbung
- 24: rückseitige Vertiefung
- 25: Aussparung in 1 a

## Patentansprüche

1. Verfahren zur Herstellung einer flexiblen, dreidimensionalen Überzugstruktur (2, 4,12), mit einer vorderseitigen Oberflächenwölbung (23) und einer rückseitigen Vertiefung (24) für einen flexiblen Schalter oder eine flexible Bedieneroberfläche, wobei
in eine Pressform (13) mit einer die Ausformung einer Oberflächenwölbung (21) bildenden Vertiefung (15) eine ungehärtete transparente Vergussmasse (14) eingetragen wird,
wobei ein in die Vertiefung (15) wenigstens teilweise eindringender Gegenstempel (17) unter Ausbildung eines Spaltes eingeführt wird, so dass sich die Vergussmasse (14) im Spalt zwischen der Ausformung der Oberflächenwölbung (21) der Pressform (13) und der Oberfläche des Gegenstempels (17) verteilt und diesen Spalt ausfüllt, und
wobei Energie in die Vergussmasse (14) eingetragen wird, so dass die Vergussmasse (14) zu einer im wesentlichen selbsttragenden, flexiblen, transparenten Oberflächenschicht (4) mit einer vorderseitigen Oberflächenwölbung (23) und einer rückseitigen Vertiefung (24) aushärtet,
**dadurch gekennzeichnet, dass**
die Energie in Form von UV-Strahlung eingetragen wird, dass der Gegenstempel (17) und/oder die Pressform (13) für die eingestrahlte UV-Strahlung im wesentlichen durchlässig ist, und dass die UV-Strahlung durch den Gegenstempel (17) und/oder die Pressform (13) in die Vergussmasse (14) eingetragen wird.

2. Verfahren nach einem der vorhergehenden Ansprüche, **dadurch gekennzeichnet, dass** die Pressform (13) in der Vertiefung (15) neben der Ausformung der Oberflächenwölbung (21) in deren gekrümmte Oberfläche wenigstens eine, bevorzugt mehrere, weitere, tiefergehende Vertiefungen (22), bevorzugt in Form von Negativen von tastenformigen Ausbuchtungen (22) aufweist, welche von der Vergussmasse (14) ebenfalls ausgefüllt werden und in der Überzugsstruktur eine dreidimensionale Oberflächenstruktur (12) bilden, wobei bevorzugtermassen der Gegenstempel (17) keine solchen zusätzlichen Ausbuchtungen ausformt so dass die Überzugsstruktur jeweils im Bereich der dreidimensionalen Oberflächenstruktur (12) eine größere Dicke aufweist als in den umgebenden Bereichen.

3. Verfahren nach einem der vorhergehenden Ansprüche, **dadurch gekennzeichnet, dass** zwischen Gegenstempel (17) und Vergussmasse (14) wenigstens eine, bevorzugt transparente, Folie (2) eingelegt wird, welche mit der transparenten Oberflächenschicht (4) nach der Aushärtung der Vergussmasse (14) verbunden ist.

4. Verfahren nach Anspruch 3, **dadurch gekennzeichnet, dass** die Folie (2) vor dem Einlegen in eine dreidimensionale Form gebracht worden ist, bevorzugtermassen in einem Tiefziehprozess.

5. Verfahren nach einem der vorhergehenden Ansprüche, **dadurch gekennzeichnet, dass** wenigstens eine Folie (2) in die rückseitige Vertiefung (24) eingelegt und mit der Oberflächenschicht (4) stoffschlüssig verbunden wird, bevorzugtermassen unter Zuhilfenahme eines UV-Klebers, wobei bevorzugtermassen die Folie (2) vor dem Einlegen in eine dreidimensionale Form gebracht worden ist, insbesondere bevorzugtermassen in einem Tiefziehprozess.

6. Verfahren nach einem der vorhergehenden Ansprüche 2-5, **dadurch gekennzeichnet, dass** wenigstens eine der Folien auf der der Oberflächenschicht (4) zugewandten Vorderseite und/oder der Rückseite mit einer Oberflächendekoration versehen wird, wobei diese Oberflächendekoration bevorzugtermassen in einem Druckverfahren wie insbesondere Siebdruck, Laserdruck, Stempeldruck, Spraydruck aufgebracht wird, und/oder wobei weiterhin bevorzugtermassen die Oberflächendekoration vor und/oder nach der Ausbildung der Oberflächenschicht (4) aufgebracht werden kann.

7. Verfahren nach einem der vorhergehenden Ansprüche 2-6, **dadurch gekennzeichnet, dass** wenigstens zwei Folien (2) eingesetzt werden, wobei wenigstens eine, für zur Aushärtung der Vergussmasse (14) eingestrahlte UV-Strahlung transparente erste Folie zwischen Gegenstempel (17) und Vergussmasse (14) eingelegt wird, und wenigstens eine zweite, vorzugsweise vor dem einlegen in eine dreidimensionale Form gebrachte Folie, welche bevorzugtermassen auf der Vorderseite und/oder der Rückseite ein Oberflächendekoration aufweist, in die rückseitige Vertiefung (24) eingelegt und mit der Rückseite der ersten Folie stoffschlüssig verbunden wird.

8. Verfahren nach einem der vorhergehenden Ansprüche, **dadurch gekennzeichnet, dass** in die rückseitige Vertiefung (24) ein Träger (1), aus transparentem elastischem Material, insbesondere aus Silikon, oder aus transparentem hartem Material (1a) mit Aussparungen (25) im Schalterbereich, eingelegt und mit der Oberflächenschicht (4) wenigstens mittelbar stoffschlüssig verbunden wird, wobei vorzugsweise der Träger (1, 1a) entweder in seiner dreidimensionalen Formgebung bereits vorgefertigt eingesetzt wird, wobei er dann auf seiner der Oberflächenschicht (4) zugewandten Oberflächen ein Oberflächendekoration aufweisen kann, oder wobei der Träger (1, 1a) direkt in der rückseitigen Vertiefung (24) ausgeformt wird.

9. Verfahren nach Anspruch 8, **dadurch gekennzeichnet, dass** der Träger (1), welcher vorzugsweise auf seiner der Oberflächenschicht (4) abgewandten Rückseite über Betätigungsstössel (7), die mit einer Membrane (6) beweglich sind, verfügt, mit der daran oberseitig befestigten Oberflächenschicht (4) bevorzugt mit wenigstens einer dazwischen liegenden Folie (2) auf eine Leiterplatte (11), vorzugsweise mit dazwischen liegenden Schnappscheiben (5) und/oder Kontaktpillen, unter Ausbildung eines Schalters aufgelegt und mit der Leiterplatte wenigstens indirekt verbunden wird.

10. Verfahren nach Anspruch 9, **dadurch gekennzeichnet, dass** im Bereich der Leiterplatte (11) und/oder im Bereich des Trägers (1) Lichtleiter und/oder Lichtabschirmungen und/oder eine Hinterleuchtung, vorzugsweise unter Zuhilfenahme von LED, einer Lichtleitfolie oder einer EL Folie, vorgesehen ist.

11. Verfahren nach einem der vorhergehenden Ansprüche, **dadurch gekennzeichnet, dass** auf und/oder in der äußeren Oberfläche der Oberflächenstruktur (12) eine Oberflächendekoration und/oder dekorative Einlegeteile vorgesehen werden, wobei Letztere vorzugsweise in der Pressform (13) eingelegt sein können.

12. Verfahren nach einem der vorhergehenden Ansprüche, **dadurch gekennzeichnet, dass** die Innenfläche der Pressform (13) für die Vergussmasse (14), wenigstens in deren ausgehärteten Form, nicht-haftend ausgebildet ist und/oder dass die Pressform Führungselemente (20) für die Führung des Gegenstempels (17) während der Einführung des Gegenstempel in die Kavität der Pressform (13) aufweist.

13. Flexible, dreidimensionale Überzugstruktur (2, 4,12) aus einer transparenten ausgehärteten Vergussmasse (14), mit einer vorderseitigen Oberflächenwölbung (23) und einer rückseitigen Vertiefung (24) für einen flexiblen Schalter oder eine flexible Bedieneroberfläche, respektive als Bestandteil eines solchen Funktionselements, hergestellt in einem Verfahren nach einem der vorhergehenden Ansprüche. -

14. Verwendung einer Überzugsstruktur nach Anspruch 13 respektive eines Schalters und/oder einer Bedieneroberfläche mit einer solchen Überzugstruktur als Bedieneinheit in der Mittelkonsole von Autos, Bestandteil eines Autoradios, Klimagerät, als Lenkradschalter, als Bestandteil eines Türgriffs mit integrierten Tasten, als Bestandteil einer Computer-Maus, als Bestandteil einer Spielkonsole, als Bestandteil einer Tastatur für Mobiltelefone und Tischtelefone.

## Claims

1. Method for producing a flexible, three-dimensional coating structure (2, 4, 12) with a surface curvature (23) on the front side and an impression (24) on the rear side for a flexible switch or a flexible user interface, wherein
an uncured, transparent casting compound (14) is introduced into a compression mould (13) with an impression (15) that forms the shaping of a surface curvature (21), wherein
a counterpunch (17) that penetrates at least partially into the impression (15) is introduced under formation of a gap, so that the casting compound (14) is distributed in the gap between the shaping of the surface curvature (21) of the compression mould (13) and the surface of the counterpunch (17) and fills this gap, and wherein energy is introduced into the moulding compound (14), so that the moulding compound (14) cures to form a substantially self-supporting, flexible, transparent surface layer (4) with a surface curvature (23) on the front side and an impression (24) on the rear side,
**characterized in that**
the energy is introduced in the form of UV radiation, **in that** the counterpunch (17) and/or the compression mould (13) is/are substantially permeable to the irradiated UV radiation, and **in that** the UV radiation is introduced into the moulding compound (14) through the counterpunch (17) and/or the compression mould (13).

2. Method according to one of the preceding claims, **characterized in that** the compression mould (13) has in the impression (15), along with the shaping of the surface curvature (21), in its curved surface at least one, preferably more, further, deeper impressions (22), preferably in the form of negatives of key-shaped indentations (22), which are likewise filled by the casting compound (14) and form a three-dimensional surface structure (12) in the coating structure, the counterpunch (17) preferably not having such additional indentations, so that the coating structure has a greater thickness in each case in the region of the three-dimensional surface structure (12) than in the surrounding regions.

3. Method according to one of the preceding claims, **characterized in that** at least one, preferably transparent, film (2) is placed between the counterpunch (17) and the casting compound (14), which film or films is/are joined to the transparent surface layer (4) after the curing of the casting compound (14).

4. Method according to Claim 3, **characterized in that** the film (2) has been brought into a three-dimensional form before placement, preferably in a thermoforming process.

5. Method according to one of the preceding claims, **characterized in that** at least one film (2) is placed into the impression (24) on the rear side and joined to the surface layer (4) with a material bond, preferably with the aid of a UV adhesive, the film (2) preferably having been brought into a three-dimensional form before placement, in particular preferably in a thermoforming process.

6. Method according to one of the preceding Claims 2-5, **characterized in that** at least one of the films is provided with a surface decoration on the front side facing the surface layer (4) and/or the rear side, it being possible for this surface decoration to be applied preferably in a printing process, such as in particular screen printing, laser printing, stamp printing or spray printing, and/or it also being possible for the surface decoration to be applied preferably before and/or after the forming of the surface layer (4).

7. Method according to one of the preceding Claims 2-6, **characterized in that** at least two films (2) are used, at least one first film, which is transparent to the UV radiation with which it is irradiated for the curing of the casting compound (14), being placed between the counterpunch (17) and the casting compound (14), and at least one second film, which is preferably brought into a three-dimensional form before the placement and preferably has a surface decoration on the front side and/or the rear side, being placed into the rear-side impression (24) and joined to the rear side of the first film with a material bond.

8. Method according to one of the preceding claims, **characterized in that** a support (1) of transparent elastic material, in particular of silicone, or of transparent hard material (1a) with cutouts (25) in the region of the switch is placed into the impression (24) on the rear side and joined to the surface layer (4) at least indirectly with a material bond, wherein the support (1, 1a) is either used already prefabricated in its three-dimensional shaping, in which case it may then have a surface decoration on its surfaces facing the surface layer (4), or the support (1, 1a) is shaped directly in the impression (24) on the rear side.

9. Method according to Claim 8, **characterized in that** the support (1), which preferably has on its rear side facing away from the surface layer (4) actuating plungers (7), which are movable by way of a membrane (6), is placed with the surface layer (4) fastened thereto on the upper side, preferably with at least one film (2) lying in between, onto a printed circuit board (11), preferably with snap domes (5) and/or contact pills lying in between, to form a switch and is at least indirectly joined to the printed circuit board.

10. Method according to Claim 9, **characterized in that** light guides and/or light shielding elements and/or backlighting may be provided in the region of the printed circuit board (11) and/or in the region of the support (1), preferably with the aid of LEDs, a light guiding film or an EL film.

11. Method according to one of the preceding claims, **characterized in that** a surface decoration and/or decorative inserts is/are provided on and/or in the outer surface of the surface structure (12), it being possible for said inserts preferably to be placed in the compression mould (13).

12. Method according to one of the preceding claims, **characterized in that** the inner surface of the compression mould (13) is formed such that it does not allow the casting compound (14) to stick, at least in its cured form, and/or **in that** the compression mould has guiding elements (20) for guiding the counterpunch (17) during the insertion of the counterpunch into the cavity of the compression mould (13).

13. Flexible, three-dimensional coating structure (2, 4, 12) of a transparent cured casting compound (14), with a surface curvature (23) on the front side and an impression (24) on the rear side for a flexible switch or a flexible user interface, or as a component part of such a functional element, produced in a method according to one of the preceding claims.

14. Use of a coating structure according to Claim 13 or a switch and/or a user interface with such a coating structure as an operating unit in the centre console of automobiles, a component part of a car radio, climatic control system, as a steering wheel switch, as a component part of a door handle with integrated keys, as a component part of a computer mouse, as a component part of a games console, as a component part of a keypad for mobile phones and desktop phones.

## Revendications

1. Procédé de fabrication d'une structure de revêtement tridimensionnelle souple (2, 4, 12) présentant une courbure de surface avant (23) et une cavité arrière (24) destinée à un commutateur souple ou une interface utilisateur souple, procédé dans lequel
l'on introduit une masse de remplissage transparente non durcie (14) dans un moule (13) doté d'une cavité (15) formant le profil d'une courbure de surface (21),
l'on introduit une contre-matrice (17), pénétrant au moins partiellement dans la cavité (15), en ménageant une fente de sorte que la masse de remplissage (14) se répand dans la fente entre le profil de la courbure de surface (21) du moule (13) et la surface de la contre-matrice (17) et comble cette fente, et
l'on apporte de l'énergie à la masse de remplissage (14) de sorte que la masse de remplissage (14) durcit pour donner une couche de surface transparente souple sensiblement autoporteuse (4) présentant une courbure de surface avant (23) et une cavité arrière (24),
**caractérisé en ce que**
l'énergie est apportée sous la forme de rayonnement UV, **en ce que** la contre-matrice (17) et/ou le moule (13) sont sensiblement transparents au rayonnement UV incident, et **en ce que** le rayonnement UV pénètre dans la masse de remplissage (14) en traversant la contre-matrice (17) et/ou le moule (13).

2. Procédé selon la revendication précédente, **caractérisé en ce que** le moule (13) comporte dans la cavité (15) indépendamment du profil de la courbure de surface (21), dans la surface incurvée de celle-ci, au moins une, de préférence plusieurs, autre cavité plus profonde (22), se présentant de préférence sous la forme de négatifs de renflements en forme de touches qui sont également comblés par la masse de remplissage (14) et qui forment dans la structure de revêtement une structure de surface tridimensionnelle (12), de préférence la contre-matrice (17) ne formant pas de tels renflement supplémentaires de sorte que la structure de revêtement a à chaque fois une épaisseur qui est plus grande dans 1a région de la structure de surface tridimensionnelle (12) que dans les régions environnantes.

3. Procédé selon l'une des revendications précédentes, **caractérisé en ce que** l'on insère entre la contre-matrice (17) et la masse de remplissage (14) au moins un film (2), de préférence transparent, qui est relié à la couche de surface transparente (4) après que la masse de remplissage (14) a durci.

4. Procédé selon la revendication 3, **caractérisé en ce que** l'on dote le film (2) d'une forme tridimensionnelle avant de l'insérer, de préférence dans un processus d'emboutissage profond.

5. Procédé selon l'une des revendications précédentes, **caractérisé en ce que** l'on insère l'au moins un film (2) dans la cavité arrière (24) et on le relie par engagement de matière à la couche de surface (4), de préférence au moyen d'une colle UV, le film (2) étant de préférence doté d'une forme tridimensionnelle avant d'être inséré, notamment de préférence dans un processus d'emboutissage profond.

6. Procédé selon l'une des revendications 2 à 5, **caractérisé en ce que** l'on dote l'au moins un des films d'une décoration de surface du côté avant dirigé vers la couche de surface (4) et/ou du côté arrière, cette décoration de surface étant appliquée de préférence dans un procédé d'impression comme notamment la sérigraphie, l'impression laser, l'estampage, l'impression par pulvérisation, et/ou la décoration de surface pouvant en outre être appliquée de préférence avant et/ou après la formation de la couche de surface (4).

7. Procédé selon l'une des revendications précédentes 2 à 6, **caractérisé en ce que** l'on insère au moins deux films (2), au moins un premier film transparent au rayonnement UV incident destiné à durcir la masse de remplissage (14) étant inséré entre la contre-matrice (17) et la masse de remplissage (14), et au moins un deuxième film, qui est doté d'une forme tridimensionnelle avant l'insertion et qui comporte de préférence une décoration de surface du côté avant et/ou du côté arrière, étant inséré dans la cavité arrière (24) et relié au côté arrière du premier film par engagement matière.

8. Procédé selon l'une des revendications précédentes, **caractérisé en ce que** l'on insère un support (1), en matière élastique transparente, notamment en silicone, ou en une matière dure transparente (1a) dotée d'évidements (25) dans la région du commutateur, dans la cavité arrière (24) et on relie ledit support au moins indirectement par engagement de matière à la couche de surface (4) ; de préférence, le support (1, 1a) est utilisé de façon déjà préfabriquée dans sa conformation tridimensionnelle, il peut alors être doté d'une décoration de surface sur sa surface dirigée vers la couche de surface (4), ou bien le support (1, 1a) est formé directement dans la cavité arrière (24).

9. Procédé selon la revendication 8, **caractérisé en ce que** l'on place le support (1), qui dispose de préférence sur son côté arrière opposé à la couche de surface (4) de pistons d'actionnement (7) qui sont mobiles au moyen d'une membrane (6) sur le côté supérieur de laquelle l'on a fixé la couche de surface (4), de préférence en intercalant au moins un film (2), sur une carte de circuits imprimés (11), de préférence en intercalant des disques à encliquetage (5) et/ou des pastilles, de façon à former un commutateur et l'on relie ledit support au moins indirectement à la carte de circuits imprimés.

10. Procédé selon la revendication 9, **caractérisé en ce que** dans la région de la carte de circuits imprimés (11) et/ou dans la région du support (1) il est prévu des guides de lumière et/ou des écrans de lumière et/ou un rétro-éclairage, de préférence au moyen de LED, d'un film photoconducteur ou d'un film électroluminescent.

11. Procédé selon l'une des revendications précédentes, **caractérisé en ce que** sur et/ou dans la surface extérieure de la structure de surface (12) il est prévu une décoration de surface et/ou des pièces d'insertion décoratives, ces dernières pouvant être insérées de préférence dans le moule (13).

12. Procédé selon l'une des revendications précédentes, **caractérisé en ce que** la surface intérieure du moule (13) destiné à la masse de remplissage (14), de préférence sous sa forme durcie, est conformée de façon non adhérente et/ou **en ce que** le moule comporte des éléments de guidage (20) servant à guider la contre-matrice (17) pendant l'introduction de la contre-matrice dans la cavité du moule (13).

13. Structure de revêtement tridimensionnelle souple (2, 4, 12) fabriquée à partir d'une masse de remplissage durcie transparente (14), présentant une courbure de surface avant (23) et une cavité arrière (24) destinée à un commutateur souple ou une interface utilisateur souple, c'est-à-dire comme partie d'un élément fonctionnel, dans un procédé selon l'une des revendications précédentes.

14. Utilisation d'une structure de revêtement selon la revendication 13 respectivement d'un commutateur et/ou d'une interface utilisateur doté d'une telle structure de revêtement comme unité de commande dans la console centrale d'automobiles, comme élément d'un autoradio, appareil de climatisation, comme commutateur de volant, comme élément d'une poignée de porte à touches intégrées, comme élément d'une souris d'ordinateur, comme élément d'une console de jeux, comme élément d'un clavier pour téléphone mobile ou téléphone fixe.
